Europäisches Patentamt

European Patent Office

Office européen des brevets

(19)

(11) **EP 1 489 506 A1**

(12) **EUROPEAN PATENT APPLICATION**
published in accordance with Art. 158(3) EPC

(43) Date of publication:
**22.12.2004 Bulletin 2004/52**

(51) Int Cl.⁷: $G06F\ 9/48$, $G06F\ 15/177$

(21) Application number: **03743507.0**

(22) Date of filing: **25.02.2003**

(86) International application number:
**PCT/JP2003/002076**

(87) International publication number:
**WO 2003/075160 (12.09.2003 Gazette 2003/37)**

(84) Designated Contracting States:
**AT BE BG CH CY CZ DE DK EE ES FI FR GB GR HU IE IT LI LU MC NL PT SE SI SK TR**

(30) Priority: **04.03.2002 JP 2002057353**

(71) Applicant: **MATSUSHITA ELECTRIC INDUSTRIAL CO., LTD.**
**Kadoma-shi, Osaka 571-0050 (JP)**

(72) Inventors:
• **TANAKA, Katsuyoshi**
  **Yokohama-shi, Kanagawa 226-0016 (JP)**
• **KODAMA, Katsufumi**
  **Kawasaki-shi, Kanagawa 216-0015 (JP)**

(74) Representative: **Grünecker, Kinkeldey, Stockmair & Schwanhäusser Anwaltssozietät**
**Maximilianstrasse 58**
**80538 München (DE)**

(54) **DECENTRALIZED PROCESSING SYSTEM, JOB DECENTRALIZED PROCESSING METHOD, AND PROGRAM**

(57)    It is possible to realize job distribution in a plurality of computer systems, considering the job completion dead-lines. Jobs queuing servers (31,33) have a function to share operating information on each computer system, a function to forecast an execution completed date of a job entered by pointing an optimization of an execution priority and an execution term; and a function to forecast again the execution completed date of the job in the execution priority modified according to the forecasted result, and a function to request for a job execution to another computer system to share the operating information according to the forecasted result.

*FIG. 2*

EP 1 489 506 A1

**Description**

<Technical Field>

The present invention relates to a distributed processing system including a plurality of computer systems, a job distributed processing method using a plurality of computer systems, and a program of selecting the optimum computer from a plurality of computer systems to cause the computer to execute a given job.

<Background Art>

The computer system becomes nowadays an Important element in the business activities to such an extent that it can be asserted that there does not exist the business activity that does not utilize the computer system. In particular, owing to the spread of the Intemet started from the latter half of the 1990s and the technological innovation associated with this, the importance of the computer systems connected mutually via the network is rising more and more.

As the background for this, there is the fact that, since the competition among the companies becomes more and more intense with the globalization and the borderless of the business activities, the time comes when the company can neither get a victory in the competition among the firms nor survive the competition unless such company can complete a part of businesses generated in all the aspects of the business activities within a predetermined term without fail to supply a market with new products, services, and the like prior to other companies even though remaining businesses are delayed.

Therefore, the companies invest a great deal of administration resource to process effectively the businesses generated in all the aspects of the business activities within a term, and construct the large-scale computer system in which a plurality of computers (servers) are connected by using the local area network (LAN) or the wide area network (WAN).

In many cases, because of the difference in the developing products, the business contents in charge, and so forth, respective departments in the company build up the computer system in which a plurality of computers are connected mutually via the network every department. In order to exchange the information among the departments and operate/manage the overall system, normally these computer systems equipped in respective departments are connected mutual via the upper network.

In the prior art, there are known a number of technologies of grasping states of respective server resources and allocating optimally the jobs to use respective server resources (hardware and software) effectively and increase a processing efficiency in the case where the process units called job, process, task, etc. processed in the computer system are executed by the computer (server).

As the job allocating method in the distributed processing computer system, (1) the method of allocating the job based on resource consuming states of respective servers in starting the job, as disclosed in JP-A-10-11406, (2) the method of forecasting previously an amount of server resource consumed by the executed job and allocating the job such that a total sum of the server resource used by the job does not exceed a total amount of resources possessed by the server, as disclosed in JP-A-10-19864, (3) the method of allocating the job based on the previously determined policy, and so on are carried out

In this way, various technologies to process totally and effectively the jobs that are given to the computer system are disclosed. But the technology to complete the job within a term requested by the user upon utilizing the computer system is seldom disclosed.

Also, respective servers constituting the large-scale computer system are the very expensive product and the system is constructed by a large number of servers. Therefore, the server resources are used effectively in the above job allocating method, and actual results of the consumed server resource are reflected in the accounting process to the user.

In the prior art, in the case where the user utilizes this large-scale computer system, the accounting process is executed based on actual results of the used server resource irrespective of whether or not the job is completed within the term requested by the user. For example, the method of saving the department, the user, the using time, etc. of each server resource in the job running history and then totalizing them is employed.

In utilizing and operating the large-scale computer systems, there are three large problems. That is, the first problem is that it is impossible to forecast previously, e.g., at the time of assigning the job, the decision whether or not the assigned job is completed within a term desired by the user.

In the prior art, it is possible to allocate effectively the jobs given to the computer system to respective servers in given order to execute. As the given job allocating method, there is (1) the method of allocating the job based on consuming states of respective server resources in starting the job. In this method, because the jobs are processed in the order in which the jobs are given by the user, a completion date of the job is largely changed according to the number of servers in the computer system, the using situation, etc. For this reason, it is very difficult for the user to forecast previously a completion time of the job in giving the jobs.

Also, as the above job allocating method, there is the method of selecting the optimum server based on the resource possessed by the server and situations of other jobs in allocating the job and executing the job in the case where (2) the job whose amount of server resource used over a lifetime (a time from a start to a stop of the job) of the job has already been known is executed. However, since the user cannot know finishing times of the jobs given by other users upon giving the job, such user cannot know previously the completion time of the job given by the user by this method.

Also, various jobs such as the job that is finished in a short time, the job that requires several days until such job is finished, etc. must be processed in the recent business activities. Especially it is difficult to check previously an amount of server resource in the lifetime of the large-scale job that requires several days to process one job, and it is impossible to use this job allocating method.

In this fashion, the conventional job allocating method gives the method that is capable of processing effectively the jobs in the shortest time in the order in which the jobs are given to the computer system, but such method cannot take account of scheduling elements of the job completion requested by the user at all.

The second problem is that the computer systems distributed/arrange on the network and possessed by a plurality of departments are not always effectively operated mutually.

Respective departments in the company construct the computer systems while supposing their maximum loads in the business. In this case, since a high period and a low period of the frequency of use of the computer system are different among the departments because of differences in the business contents in respective departments, etc., there is a high possibility that the computer systems can be used mutually. However, for fear that such a situation should occur that their operations cannot be adjusted even when the frequency of use in the department is increased, and the like, sometimes their mutual operation is not consciously applied.

In the prior art, in the disclosed technologies to grasp operating states of a plurality of computer systems and operate mutually the systems, there is the technology to provide the job queuing server to a plurality of computer systems respectively.

According to this technology, the job queuing server in the computer system in one department sets previously an amount of acceptable job given from the job queuing servers in the computer systems in other departments, and then denies or restricts the job given from the computer systems in other departments in a period in which an operating ratio becomes high, or the like, for example, in response to the operating situation in own department.

This method is effective in the case where it is known previously that the operating ratio of the computer system in own department becomes low in a certain period, or the case where it is decided as a rule that a predetermined amount of job should be accepted irrespective of the operating situation of the computer system in own department However, because normally the operating situation of the computer system dynamically changes, it is very difficult for the user to forecast the operating situation of the computer system and utilize the computer resource based on advance estimation of the number of executable jobs and the job running time.

The third problem is the accounting process of the job. In the accounting process of the computer system in the prior art, the using actual results (department, user, using time, etc.) of the jobs processed by respective servers are put together in one section, and then the charge for using the computer is calculated by totalizing the using actual results every user. In the using actual results of the computer used as the basis of the charge for using the computer, it is not considered at all whether or not the assigned job can be finished within a term that is requested by the user.

Also, in the situation that the jobs are to be processed in order of job acceptance, the user's request can often be satisfied by executing the user's job prior to other jobs even when the job is not finished within the term that is requested by the user. The actual circumstances are that the quality of service for the computer user is not taken into consideration in the prior art. From a standpoint of the user of the computer system, it is desired that the totalizing process of the using actual results of the computer should be executed while considering whether or not the user's job is completed within the requested term.

In addition, in the accounting process of the job when the computer systems in other departments are utilized, the charge for using the computer must be adjusted to keep the equitability in use.

The present invention has been made to overcome the above problems in the prior art, and it is an object of the present invention to provide a distributed processing system, a job distributed processing method, and a program capable of forecasting previously a period within which a job offered by a user is completed in the case where the job is executed by using a plurality of computer systems, and also capable of realizing a job allocation with regard to a job finishing term in utilizing the computer systems.

Also, it is another object of the of the present invention to provide a distributed processing system, a job distributed processing method, and a program capable of executing a accounting process in conformity with the service provided to the computer user by considering whether or not the given job is completed within the user's desired date.

<Disclosure of the Invention>

A distributed processing system set forth in Claim 1 of the present invention provides a distributed processing system including a plurality of computer systems, which comprises a means for sharing respective operating information of the computer systems; a means for pointing an optimization of an execution priority of a job given to one of the computer systems and an execution term; a means for forecasting an execution completed date of the given job and forecasting again the execution completed date of the job in the execution priority that is altered in response to a forecasted result; and a means for assigning the job execution to other computer systems that share the operating information in response to the forecasted result.

A job distributed processing method set forth in Claim 13 of the present invention provides a job distributed processing method using a plurality of computer systems that share operating information mutually, which comprises a step of giving a job to one of the computer systems by pointing an optimization of an execution priority of a job and an execution term; a step of forecasting an execution completed date of the given job; a step of altering an execution priority of the job in response to a forecasted result; a step of forecasting the execution completed date of the job after execution priority of the job is altered; and a step of assigning the job execution to other computer systems that share the operating information in response to the forecasted result.

A program set forth in Claim 25 of the present invention provides a program for selecting an optimum computer from a plurality of computer systems to cause the computer to execute a given job, which causes a computer to function as a means for sharing respective operating information of the computer systems, a means for forecasting an execution completed date of the given job by pointing an optimization of an execution priority and an execution term, and forecasting again the execution completed date of the job in the execution priority that is altered in response to a forecasted result, and a means for assigning the job execution to other computer systems that share the operating information in response to the forecasted result.

According to the above configuration, the operating information are shared among the computer systems, the execution completed date of the given job is forecasted with regard to the pointed execution term while optimizing the execution priority of a job given to one of the computer systems, the job execution is assigned to other computer systems that share the operating information in response to the forecasted result. Therefore, even when the execution term requested by the user cannot be satisfied by the computer system in the department to which the user belongs, the user's request can be satisfied at a maximum level by utilizing the resource on the other computer systems.

Also, according to the inventions set forth in Claim 2, Claim 14 and Claim 26, the job being executed now and the time required until the wait-for-execution job is completed can be forecasted individually. Therefore, in order to complete the execution of the given job in a shortest time, the proper job allocation can be achieved to utilize effectively the resource.

Also, according to the inventions set forth in Claim 3, Claim 15 and Claim 27, even when the similar jobs were executed in the past but the execution number is not known, such similar jobs can be searched from the job execution history data and thus a prediction precision of the execution completed date of the job can be improved.

Also, according to the inventions set forth in Claim 4, Claim 16 and Claim 28, when the jobs similar to the given job were executed in the past and such jobs can be pointed, the similar jobs can be searched directly from the job execution history data, and forecasting of the execution completed date of the job can be executed with high precision.

Also, according to the inventions set forth in Claim 5, Claim 17 and Claim 29, even when the jobs similar to the given job were not executed in the past, the execution completed date of the given job can be forecasted by inputting the execution time predicted value from the user, and thus the process in the present system can be accelerated.

The distributed processing system set forth in Claim 6 of the present invention, in the distributed processing system according to any one of Claim 1 to Claim 5, further comprises an accounting means for adjusting a unit cost of time in a charge for using the computer for the job in response to an altered degree of the execution priority of the job.

The job distributed processing method set forth in Claim 18 of the present invention, in the job distributed processing method according to claim 13, further comprises a step of adjusting a unit cost of time in a charge for using the computer for the job in response to an altered degree of the execution priority of the job.

The program set forth in Claim 30 of the present invention, in the program according to any one of Claim 25 to Claim 29, further causes the computer to function as a means for adjusting a unit cost of time in a charge for using the computer for the job in response to an altered degree of the execution priority of the job.

According to the above configuration, since the unit cost of time in the charge for using the computer for the job is adjusted in answer to the altered level of the execution priority of the job, the accounting process is carried out to keep appropriately the balance between the job completed date pointed by the user and the charge for using the computer.

Also, according to the inventions set forth in Claim 7, Claim 19 and Claim 31, since the unit cost of time in the charge for using the computer is increased when the execution priority of the job is pulled up, the balance between the job completed date pointed by the user and the charge for using the computer can be kept appropriately and also the fair accounting process can be applied.

Also, according to the inventions set forth in Claim 8, Claim 20 and Claim 32, since the unit cost of time in the charge for using the computer for the job whose execution priority is pulled down to pull up the execution priority of other jobs is lowered, the fair accounting process capable of taking account of the user of the job whose execution priority is pulled down can be applied.

Also, according to the inventions set forth in Claim 9, Claim 21 and Claim 33, since the accounting process is executed to cancel out a decreased amount of the charge for using the computer for the job whose execution priority is pulled down and an increased amount the charge for using the computer for the job whose execution priority is pulled up, the fair accounting process can be applied to the users not to change the charge for using the computer of the overall system.

Also, according to the inventions set forth in Claim 10, Claim 22 and Claim 34, even when the prediction to the effect that the job can be completed within the pointed execution term by the computer system to which the job is given cannot be obtained, the execution completed date obtained when the job is executed by other computer systems can be forecasted. Therefore, the maximum possibility to satisfy the user's request can be checked.

Also, according to the inventions set forth in Claim 11, Claim 23 and Claim 35, when the job is executed by the computer system that is different from the computer system to which the job is given, the accounting process can be carried out by taking account of the charge for using the computer decided by the computer system that executes the given job. Therefore, since the proper charge for using the computer can be paid to the sections that possess the computer systems, the mutual operation of the computer systems can be accelerated.

Also, according to the inventions set forth in Claim 12, Claim 24 and Claim 36, when it is forecasted that the given job is not completed within the pointed execution term, the prediction of the shortest completion term of the job is offered and also the unit cost of time in the charge for using the computer is offered. Therefore, the information offer to make the user consent can be achieved and the user is advised to take the appropriate measure.

<Brief Description of the Drawings>

FIG.1 is a block diagram showing a configuration of a distributed processing system according to an embodiment of the present invention;
FIG.2 is a block diagram showing a configuration of major functions of a job queuing server in the distributed processing system according to the embodiment of the present invention;
FIG.3 is a view showing an example of an information format that is shared with the job queuing servers;
FIG.4 is a flowchart explaining an operation of the distributed processing system according to an embodiment of the present invention;
FIG.5 is a view showing an example of a job assigning format to the job queuing server;
FIG.6 is a view showing an example of a tabulating format of the searched results of similar jobs;
FIG.7 is a view showing an example of a data format used to manage operating states of respective servers;
FIG.8 is a view showing an example of an attribute format of a wait-for-execution job managed by the job queuing server;
FIG.9 is a view showing an example of a saving format of job running history data;
FIG.10 is a flowchart explaining an operation of an accounting/totalizing process; and
FIG.11 is a view showing an example of an output format of an actual result report about a user associated CPU using time.

In Figures, a reference symbol 21, 22 are a client, 31, 33 queuing server, 32, 34 memory device, 41, 42 file server, 51, 52 server, 61, 62 accounting/totalizing server, 10, 12 local area network (LAN), 11 wide area network (WAN), 101 job history referring function, 102 job history saving function, 103 job running priority managing function, 104 job allocating function, 105 finish time computing function of a wait-for-execution job, 106 server availability computing function, 107 server performance managing function, and 108 server operational schedule managing function.

<Best Mode for Carrying Out the Invention>

An embodiment of the present Invention will be explained with reference to the drawings hereinafter.

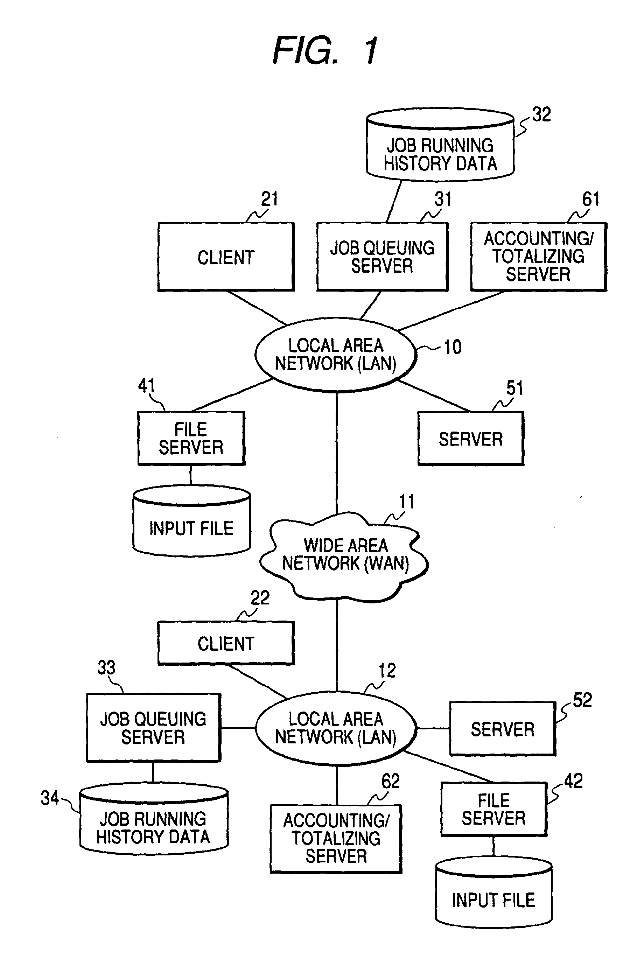

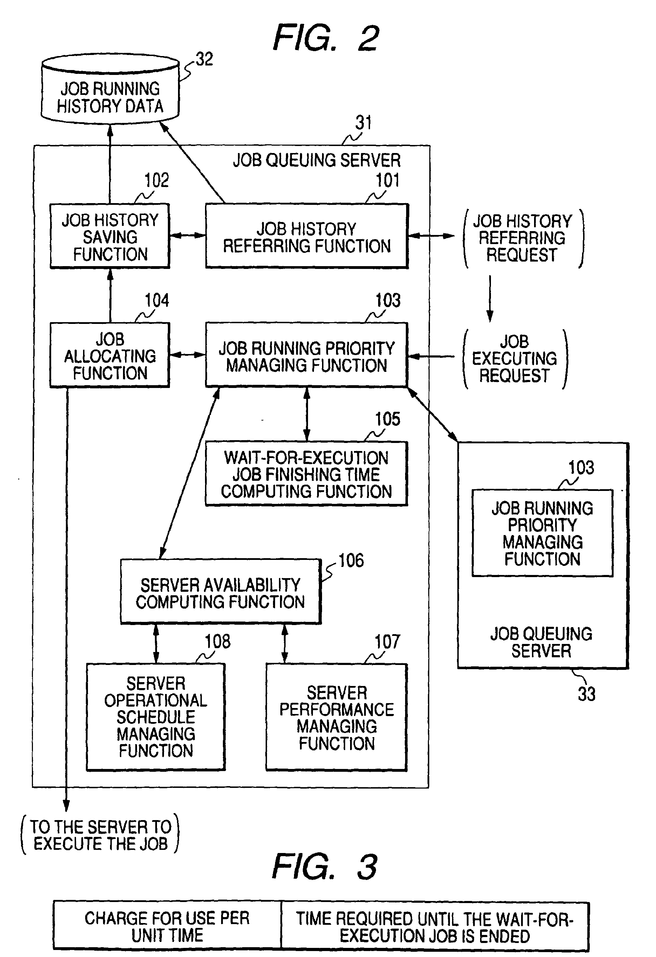

FIG.1 is a block diagram showing a configuration of a distributed processing system according to an embodiment of the present invention, and FIG.2 is a block diagram showing a configuration of major functions of a job queuing server in the distributed processing system according to the embodiment of the present invention.

In FIG. 1, clients 21, 22 are computers to which the job is given, and also job queuing servers 31, 33 are computers that decide the priority in job execution to complete the job within a term that the user desires, search the server that is able to execute optimally the job, and allocate the job to the server. Also, memory devices 32, 34 for saving the job running history data are connected to the job queuing server 31, 33 respectively.

File servers 41, 42 are computers for holding input files and application programs used in the job, servers 51, 52 are computers for executing the job, and accounting/totalizing servers 61, 62 are computers for executing the accounting process based on job running history data. Job files, input files, and application files are stored in the memory devices connected to the file servers 41, 42.

The client 21 and the servers 31, 41, 51, 61 are the computers containing the personal computer or the work station, and are connected mutually via a local area network 10 to constitute a first computer system. Similarly, the client 22 and the servers 32, 42, 52, 62, are the computers containing the personal computer or the work station, and are connected mutually via a local area network 12 to constitute a second computer system.

Also, the first computer system and the second computer system are connected mutually via a wide area network 11. The first computer system and the second computer system are independently operated respectively and also operated as one integrated computer system because the job queuing server 31 and the job queuing server 33 can share periodically the job running environment information and the job management information in mutual systems.

As shown in FIG.2, the job queuing server 31 includes a job history referring function 101 of referring the job running history data in the past, a job history saving function 102 of saving the job running history data, a job running priority managing function 103 of deciding the priority in job allocation to complete the job within the term that the user desires, a job allocating function 104 of selecting the optimal server to execute the given job and allocating automatically the job to the server, a wait-for-execution job finishing time computing function 105 of forecasting a time required until the wait-for-execution job is finished, a server availability computing function 106 of forecasting a time required until the process in operation in the server is completed, a server performance managing function 107 of normalizing the capacities of the servers that execute the job, and a server operational schedule managing function 108 of managing an operational prearranged schedules of the servers that execute the job.

The job queuing server 33 is constructed similarly, but only the job running priority managing function 103 is shown in FIG.2 and others are omitted. The job running priority managing function 103 of the job queuing server 31 and the job running priority managing function 103 of the job queuing server 33 decide based on operational conditions of respective systems whether or not the server can accept the job from other systems, and then share periodically the information in a format shown in FIG.3, for example, as the job running environment information and the job management information in respective systems if the server accepts the job.

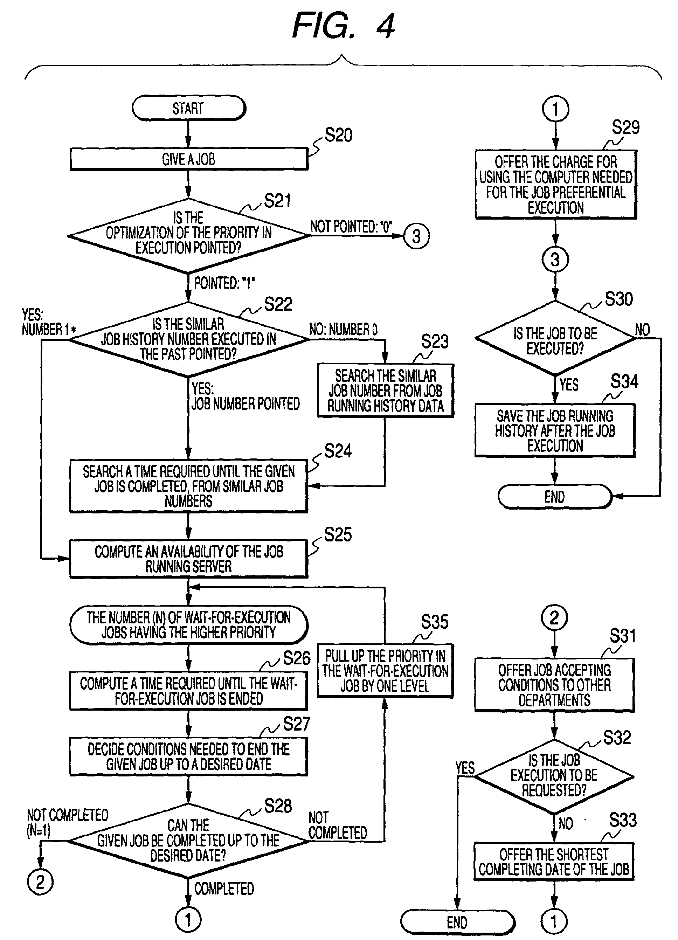

An operation of the computer system constructed as above in processing the job that is given to the first computer system, for example, will be explained with reference to a flowchart shown in FIG.4 hereunder.

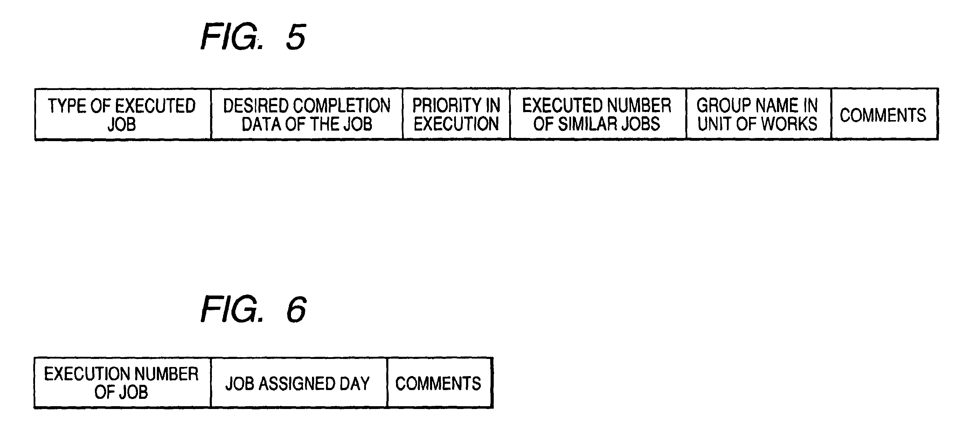

First, in step S20, when the user of the cllent 21 executes the job, such user gives the job to the job queuing server 31 while designating optimization of the priority in execution and a desired completion date in a job assigning format shown in FIG.5. If the optimization of the priority in execution is designated, the priority in executing the job is set to the lowest order and then a schedule to give the minimum charge for using the computer is arranged by checking whether or not the job can be completed within the desired completion date, while pulling up the priority sequentially.

More particularly, a digit "1" is pointed in the box of the priority in execution in the case where the schedule to give the lowest charge for using the computer is desired when the job should be completed until a sufficient completion date because no restriction is imposed on the job completion date or a loose job completion date is pointed, or in the case where increase in the charge for using the computer may be accepted because the high priority In execution is given to complete preferentially the job within the pointed completion date. In contrast, a digit "0" is pointed in the box of the priority in execution in the case where the job is executed in the normal priority in execution.

In addition, the executed number of similar jobs is pointed in the case where the job similar to the job to be executed at this time was executed previously and the executed number of similar jobs has already been known. Also, a digit "0" is pointed in the box of the executed number of similar jobs in the case where the job similar to the job to be executed at this time was executed previously but the executed number of similar jobs is not known. Also, a special character "∗" and a time (second) estimated by the user to complete the job are pointed subsequently to a digit "1" in the case where the job similar to the job to be executed at this time was not executed previously.

In step S21, it is checked whether or not the optimization of the priority in execution is pointed. If a value in the box of the priority in execution is the digit "0", the job priority in execution is not altered and then the process goes to step S30. If a value in the box of the priority in execution is the digit "1", the priority of the given job is brought down once to the lowest order to optimize the priority in executing the job and then the process goes to step S22.

Then, in step S22, it is decided whether or not the similar job history number executed in the past is pointed. Then, the process goes to step S23 if the digit "0" is pointed, the process goes to step S25 if the special character "∗" and the time (second) estimated by the user to complete the job are pointed subsequently to the digit "1", and the process goes to step S24 if the executed number of similar jobs is pointed by other digit.

In step S23, the job history referring function 101 searches the similar job number from the job running history data 32 if the user points the digit "0" in the box of the executed number of similar jobs. At that time, the user name, the type of the job, and the group name in unit of works, for example, are utilized as a key used to search the similar job. The job queuing server 31 tabulates searched results of the similar jobs in a format shown in FIG.6, while the user selects the executed number of the similar jobs.

In step S24, the job history referring function 101 searches a time required until the given job is completed, from the job running history data 32 if the executed number of similar jobs is known by any method in this manner.

Then, in step S25, the server availability computing function 106 computes an availability of the server that can execute the job of the type given at this time. This is used to forecast precisely a job progress rate of the job being now executed on the server and a time at which the given job is completed, based on the operational schedule of the server.

First, the server availability computing function 106 receives information of the computing ability (SPEC) of each server from the server performance managing function 107 that manages the computing ability (SPEC) of each server. For example, the computing ability is calculated by a following equation.

$$SPEC = CPU \text{ frequency (MHz)} \times \text{number of CPUs} \times \text{actual memory}$$

$$\text{amount (MB)}$$

Then, the server availability computing function 106 checks days and times that respective server can utilize, by the server operational schedule managing function 108. For example, when the schedule indicating that the operation of the server is stopped after 12 hours is set forth, such server is excepted from candidates of the servers that are available to the job.

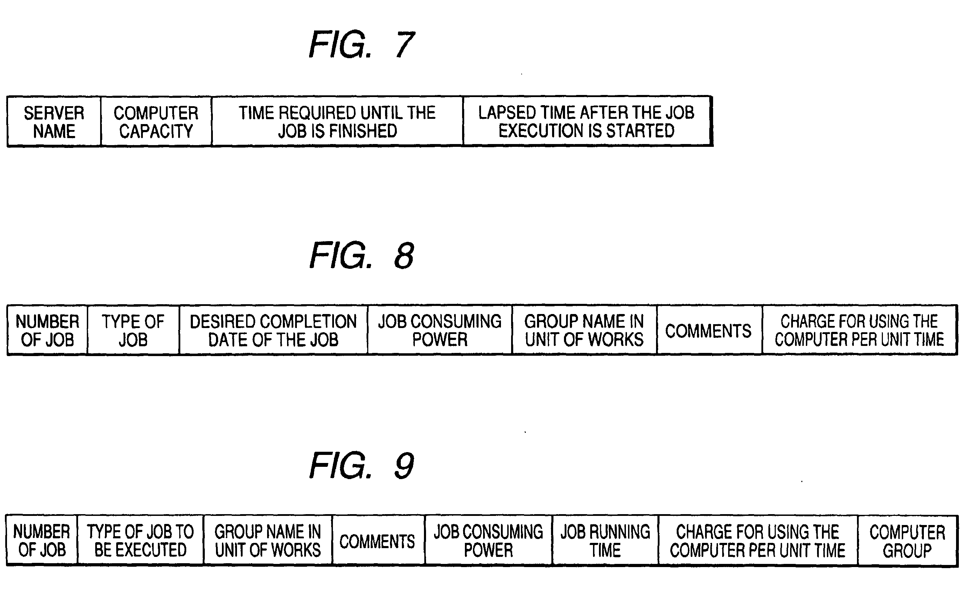

Finally, the server availability computing function 106 sums up information of the operating situations of respective servers in a format shown in FIG.7 to calculate the job progress rate (PROG) in respective servers. The computer availability (AVA) of respective servers for the wait-for-execution job can be calculated from this result at the existing point of time. For example, PROG and AVA are calculated as follows.

$$PROG = \text{lapsed time after the job execution is started (second)}/\text{time}$$

$$\text{required until the job is finished (second)}$$

$$AVA = \text{job progress rate (PROG)} \times \text{server computing ability (SPEC)}$$

In step S25, the computer availability (AVA) of each server is calculated, and then the total results of all servers give the computer availability.

Then, a time required until N wait-for-execution jobs are finished is calculated. The wait-for-execution jobs are managed in a format shown in FIG.8 by the job queuing server 31. The job consuming power is given by a value obtained by multiplying the computing ability (SPEC) required to complete the job and a time (second) required up to the end, for example.

For example, the job consuming power required for the job that needs 50 second by the sever having SPEC=100 is given by 100 × 50=5000. A time (Qutime) required to complete the job when this job is executed by the sever having the computing ability SPEC=200 is given by 5000/200=25 (second).

In this manner, in step S26, the time (Qutime) required to complete the wait-for-execution job is calculated at the present point of time by adding a value obtained by dividing a total sum of the job consuming powers of the wait-for-execution jobs by a total sum of the computing abilities of the servers that can execute the wait-for-execution job and the computer availability (AVA) calculated in step S25.

Then, the conditions under which the job assigned by the user at this time is completed within the requested term are decided. That is, it is decided whether or not the job can be completed within the date and time, which are whether or not the job can be completed within the date and time, which are desired by the user, by pulling up the priority of the wait-for-execution job. More particularly, it is decided whether or not the execution term of the job requested by the user can be satisfied by adjusting the priority of the wait-for-execution job among a group of jobs the optimization of the execution priority of which is designated.

In the case where the priority of the wait-for-execution job is to be altered, the charge for using the computer per unit time must be set higher than the case where the execution priority of the job is pulled down maximally. At that time, a correcting rate of the charge for using the computer per unit time is decided by referring a function of managing the charge for using the computer in the accounting/totalizing server 61. The function of managing the charge for using the computer signifies a function of correcting the charge for using the computer on the basis of the normal charge for using the computer and, for example, correcting criteria are given as follows.

Criterion 1: As with the job 1 whose priority in executing the job has already been altered by increasing the charge for using the computer according to the optimization of the priority of the job that is assigned at this time, the priority of the wait-for-execution job is altered under the conditions that the execution term is satisfied and the job execution priority is not pulled up higher than the normal priority in executing the jobs in the job group. At that time, the charge for using the computer that is higher than the job 1 by one level is applied to the job that is assigned at this time.

Criterion 2: the charge for using the computer, which is higher than the charge for using the computer for the job the optimization of the job executing priority of which is not designated, is not applied as the charge for using the computer for the job 1 whose job executing priority is pulled down.

In step S27, It is decided by a following inequality based on such criteria, for example, whether or not the job is completed within a job completion data (Reqtime) requested by the user.

$$\text{Reqtime} \geq \text{current time+comptuer availability (AVA)} + \text{wait-for-execution}$$

$$\text{job completing time (Qutime)}$$

In step S28, three decisions are made by this inequality. The first decision is made when the job can be completed within the term requested by the user, and the process goes to step S29. In step S29, the charge for using the computer per unit time as the condition that the job is completed within the term requested by the user is offered.

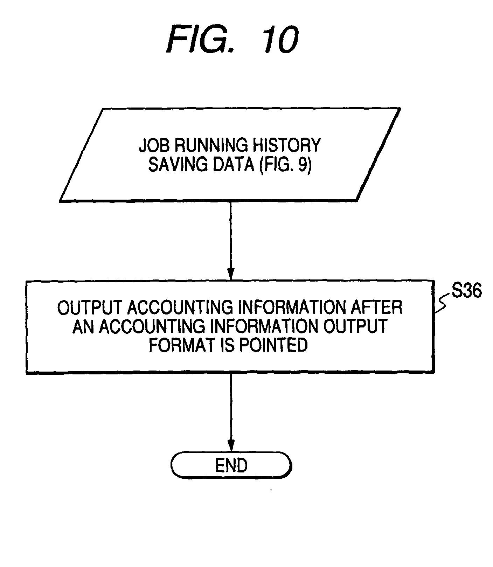

Then, the user makes finally the decision of the job execution based on the charge for using the computer per unit time offered by the job queuing server 31 and the job completion date. If the job is not executed, the process is ended in step S30. If the job is executed, various data of the job running history are saved in the job running history data 32 in a format shown in FIG.9 in step S34 after the job is completed.

The second decision is made when the user's request cannot be satisfied. In step SS35, the priority in executing the given job is pulled up by one level. At that time, the charge for using the computer is increased at a predetermined rate. In contrast, the charge for using the computer for the job whose priority in executing the job is pulled down is reduced by an amount of money corresponding to an increase in the charge for using the computer for the job whose priority in executing the job is pulled up. In this fashion, the processes staring from step S26 are repeated again by the number (N) of the wait-for- execution jobs whose priorities are higher than the priority of the given job.

The third decision is made when there is no possibility that the job can be completed within the term requested by the user by means of the first computer system even though the priority in executing the job is pulled up to the highest level, and the process goes to step S31. In step S31, the availability of the second computer system operated by other departments is checked.

The job queuing servers 31, 33 share the operating formation of the computer systems in mutual departments in a format shown in FIG.3 at a predetermined period via the job running priority managing function 103. Since this information is the information that is always calculated by the job queuing server in giving the job, there is no necessity to calculate the information newly. In step S31, this information is offered to the user.

In step S32, the user decides finally based on the offered information whether or not the job execution by utilizing the second computer system is requested. If the second computer system is not utilized, the job is not completed within the term requested by the user, and then the process goes to step S33. In step S33, the final scheduled date when the job is executed in the shortest period is offered based on the information used previously in the decision in step S27, and then the process goes to step S29. The processes in step S29 et seq. are similar to the case of the first decision.

As described above, according to the present embodiment, since the job is completed within the date requested by the user with regard to the operation situation of the computer system, functions of altering the priority in executing the job and jointing the charges for using the computer per unit time can be implemented.

Also, since the user can utilize the computer systems in other departments even when the computer system in the department to which the user belongs cannot satisfy the schedule requested by the user and the charges for using the computer, the request of the user can be satisfied at its maximum.

Next, the accounting/totalizing process in the present embodiment will be explained with reference to a flowchart shown in FIG.10 hereunder. The accounting/totalizing server 61 has a function of totalizing the accounting/totalizing information based on the charge for using the computer per unit time, which is set in altering the priority of the wait-for-execution job, from the job running history data saved in step S34 to output.

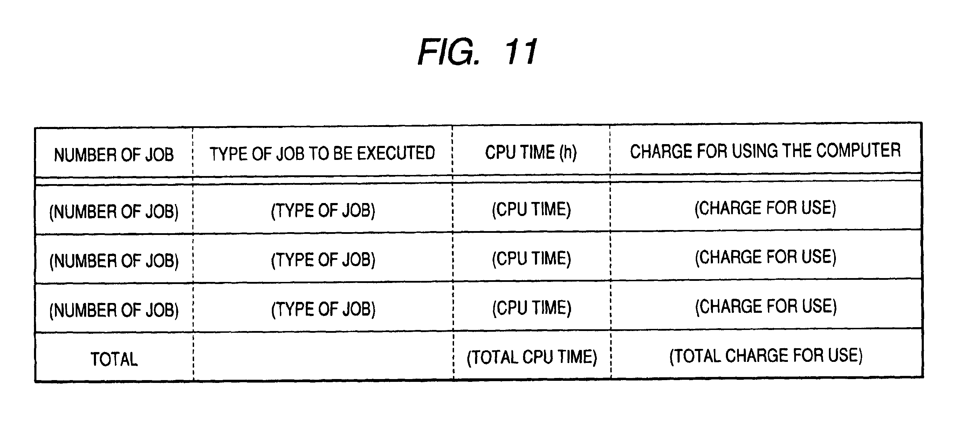

In other words, in step S36, the user associated charges for using the computer are calculated based on the information, a format of which is shown in FIG.9, saved in the job running history data 34. For example, user associated CPU using time actual result reports are output in an output format shown in FIG.11. Here, individual charges for using the computer are obtained by multiplying the charge for using the computer per unit time by a time required until the job is completed. Thus, the report is output in unit of the computer group such that the user can discriminate the charge needed in utilizing the computer systems in other departments.

As described above, according to the present embodiment, the function of demanding the charge for using the computer system in response to the altered rate of the priority in executing the job can be realized in the case where the user pulls up the priority in executing the job to execute preferentially the particular job.

Also, since the using actual results reports are totalized in unit of the computer system in which the job is executed, the charge for using the computer can be demanded to other departments when the user utilizes the computer systems in other departments. Thus, not only the job can be executed simply but also the accounting system capable of accounting fairly the charge to meet the used conditions of the user can be provided.

In this way, when the user utilizes the computer system, the job execution can be implemented to meet the situations of the user and also the charge can be demanded in response to the used rate of the computer system. Therefore, the fairness can be satisfied over all the users.

The present invention is explained in detail with reference to the particular embodiment. But it is apparent for the person skilled in the art that various variations and modifications may be applied without departing a spirit and a scope of the present invention.

This application was filed based on Japanese Patent Application No.2002-57353 filed on March 4, 2002, and the contents thereof are incorporated herein by the reference.

<Industrial Applicability>

As described above, according to the present invention, the computer systems share their operating information, then the execution completion date is forecasted with regard to the pointed execution term while optimizing the priority in executing the job given to one computer system, and the job is assigned to other computer systems sharing the operating information in response to the forecasted result. Therefore, the user's request can be satisfied at its maximum by utilizing the resource on the other computer systems even when the execution term requested by the user cannot be satisfied by the computer system in the department to which the user belongs. Also, the effective use of the computer resource can be achieved by operating the computer systems possessed by respective departments mutually in this manner.

In addition, according to the present invention, since a unit cost of time of the charge for using the computer for the job is adjusted in response to an altered degree of the priority in executing the job, the accounting process is carried out to keep appropriately the balance between the job completed date pointed by the user and the charge for using the computer, and also the fair accounting process can be applied to the user even in the situation that the operating ratio of the computer system becomes high and thus the job waiting is generated.

**Claims**

1. A distributed processing system including a plurality of computer systems, comprising:

   a means for sharing respective operating information of the computer systems;
   a means for pointing an optimization of an execution priority of a job given to one of the computer systems and an execution term;
   a means for forecasting an execution completed date of the given job and forecasting again the execution completed date of the job in the execution priority that is altered in response to a forecasted result; and
   a means for assigning the job execution to other computer systems that share the operating information in response to the forecasted result.

2. A distributed processing system according to claim 1, wherein the means for forecasting an execution completed date of the job executes a forecast based on forecasted results by a means for forecasting the job executed now and a means for forecasting a time required until a wait-for-execution job is completed.

3. A distributed processing system according to claim 1 or claim 2, further comprising a means for selecting similar jobs to the given job from execution history data; and wherein the execution completed date of the job is forecasted by referring the execution history data of the selected similar job.

**4.** A distributed processing system according to claim 1 or claim 2, wherein the means for forecasting the execution completed date of the job forecasts the execution completed date of the given job by referring the execution history data of the pointed similar job when a user points the similar job which is similar to the given job and whose execution is completed in a past.

**5.** A distributed processing system according to claim 1 or claim 2, further comprising a means for inputting an execution time predicted value of the given job; and wherein the means for forecasting the execution completed date of the job forecasts the execution completed date of the given job by referring the execution time predicted value.

**6.** A distributed processing system according to any one of claim 1 to claim 5, further comprising an accounting means for adjusting a unit cost of time in a charge for using the computer for the job in response to an altered degree of the execution priority of the job.

**7.** A distributed processing system according to claim 6, wherein the accounting means increases the unit cost of time in the charge for using the computer for the job when the execution priority of the job is pulled up.

**8.** A distributed processing system according to claim 6, wherein the accounting means lowers the unit cost of time in the charge for using the computer for the job whose execution priority is pulled down when the execution priority of other job is pulled down to pull up the execution priority of the given job.

**9.** A distributed processing system according to claim 8, wherein the charge for using the computer is decided to cancel out a decreased amount of the charge for using the computer for the job whose execution priority is pulled down and an increased amount the charge for using the computer for the job whose execution priority is pulled up.

**10.** A distributed processing system according to any one of claim 1 to claim 9, wherein the means for forecasting the execution completed date of the job forecasts the execution completed date obtained when the job is executed by other computer systems by referring the operating information when a prediction to an effect that the job is completed within the pointed execution term is not derived by altering the execution priority of the given job.

**11.** A distributed processing system according to any one of claim 1 to claim 5, further comprising an accounting means for executing an accounting process by referring the operating information with regard to the charge for using the computer decided by other computer systems when the job given to one computer system is executed by the other computer systems.

**12.** A distributed processing system according to any one of claim 1 to claim 11, further comprising a means for offering a forecasted result of a shortest completed date of the job and a unit cost of time in the charge for using the computer corresponding to the forecasted result when a prediction to an effect that the given job is completed within the pointed execution term is not derived.

**13.** A job distributed processing method using a plurality of computer systems that share operating information mutually, comprising:

> a step of giving a job to one of the computer systems by pointing an optimization of an execution priority of a job and an execution term;
> a step of forecasting an execution completed date of the given job;
> a step of altering an execution priority of the job in response to a forecasted result;
> a step of forecasting the execution completed date of the job after execution priority of the job is altered; and
> a step of assigning the job execution to other computer systems that share the operating information in response to the forecasted result.

**14.** A job distributed processing method according to claim 13, wherein the step of forecasting an execution completed date of the job executes a forecast based on the job being executed now and a time required until a wait-for-execution job is completed.

**15.** A job distributed processing method according to claim 13, further comprising:

> a step of selecting similar jobs to the given job from execution history data; and
> a step of forecasting the execution completed date of the job by referring the execution history data of the selected similar job.

**16.** A job distributed processing method according to claim 13, further comprising:

a step of pointing the similar job which is similar to the given job and whose execution is completed in a past by a user; and
a step of forecasting the execution completed date of the given job by referring the execution history data of the pointed similar job.

**17.** A job distributed processing method according to claim 13, further comprising:

a step of inputting an execution time predicted value of the given job by a user; and
a step of forecasting the execution completed date of the given job by referring the execution time predicted value.

**18.** Ajob distributed processing method according to claim 13, further comprising a step of adjusting a unit cost of time in a charge for using the computer for the job in response to an altered degree of the execution priority of the job.

**19.** A job distributed processing method according to claim 13, further comprising a step of increases the unit cost of time in the charge for using the computer for the job when the execution priority of the job is pulled up.

**20.** A job distributed processing method according to claim 13, further comprising a step of lowering the unit cost of time in the charge for using the computer for the job whose execution priority is pulled down when the execution priority of other job is pulled down to pull up the execution priority of the given job.

**21.** A job distributed processing method according to claim 13, further comprising a step of deciding the charge for using the computer to cancel out a decreased amount of the charge for using the computer for the job whose execution priority is pulled down and an increased amount the charge for using the computer for the job whose execution priority is pulled up.

**22.** A job distributed processing method according to claim 13, further comprising a step of forecasting the execution completed date obtained when the job is executed by other computer systems by referring the operating information when a prediction to an effect that the job is completed within the pointed execution term is not derived by altering the execution priority of the given job.

**23.** A job distributed processing method according to claim 13, further comprising a step of executing an accounting process by referring the operating information with regard to the charge for using the computer decided by other computer systems when the job given to one computer system is executed by the other computer systems.

**24.** A job distributed processing method according to claim 13, further comprising a step of offering a forecasted result of a shortest completed date of the job and a unit cost of time in the charge for using the computer corresponding to the forecasted result when a prediction to an effect that the given job is completed within the pointed execution term is not derived.

**25.** A program for selecting an optimum computer from a plurality of computer systems to cause the computer to execute a given job, for causing a computer to function as

a means for sharing respective operating information of the computer systems,
a means for forecasting an execution completed date of the given job by pointing an optimization of an execution priority and an execution term, and forecasting again the execution completed date of the job in the execution priority that is altered in response to a forecasted result, and
a means for assigning the job execution to other computer systems that share the operating information in response to the forecasted result.

**26.** A program according to claim 25, further causing the computer to function as a means for forecasting an execution completed date of the given job based on forecasted results of the job executed now and a time required until a wait-for- execution job is completed.

**27.** A program according to claim 25 or claim 26, further causing the computer to function as a means for selecting similar jobs to the given job from execution history data, and a means for forecasting the execution completed date of the job by referring the execution history data of the selected similar job.

**28.** A program according to claim 25 or claim 26, further causing the computer to function as a means for forecasting the execution completed date of the job forecasts the execution completed date of the given job by referring the execution history data of the pointed similar job when a user points the similar job which is similar to the given job and whose execution is completed in a past

**29.** A program according to claim 25 or claim 26, further causing the computer to function as a means for forecasting the execution completed date of the given job by referring the execution time predicted value.

**30.** A program according to any one of claim 25 to claim 29, further causing the computer to function as a means for adjusting a unit cost of time in a charge for using the computer for the job in response to an altered degree of the execution priority of the job.

**31.** A program according to claim 30, wherein the unit cost of time in the charge for using the computer for the job is increased when the execution priority of the job is pulled up.

**32.** A program according to claim 31, wherein the unit cost of time in the charge for using the computer for the job whose execution priority Is pulled down is lowered when the execution priority of other job is pulled down to pull up the execution priority of the given job.

**33.** A program according to claim 32, wherein the charge for using the computer is decided to cancel out a decreased amount of the charge for using the computer for the job whose execution priority is pulled down and an increased amount the charge for using the computer for the job whose execution priority is pulled up.

**34.** A program according to any one of claim 25 to claim 29, further causing the computer to function as a means for forecasting the execution completed date obtained when the job is executed by other computer systems by referring the operating information when a prediction to an effect that the job is completed within the pointed execution term is not derived by altering the execution priority of the given job.

**35.** A program according to any one of claim 25 to claim 29, further causing the computer to function as a means for executing an accounting process by referring the operating information with regard to the charge for using the computer decided by other computer systems when the job given to one computer system is executed by the other computer systems.

**36.** A program according to any one of claim 25 to claim 35, further causing the computer to function as a means for offering a forecasted result of a shortest completed date of the job and a unit cost of time in the charge for using the computer corresponding to the forecasted result when a prediction to an effect that the given job is completed within the pointed execution term is not derived.

# FIG. 1

# FIG. 2

JOB RUNNING HISTORY DATA — 32

JOB QUEUING SERVER — 31

JOB HISTORY SAVING FUNCTION — 102

JOB HISTORY REFERRING FUNCTION — 101

( JOB HISTORY REFERRING REQUEST )

JOB ALLOCATING FUNCTION — 104

JOB RUNNING PRIORITY MANAGING FUNCTION — 103

( JOB EXECUTING REQUEST )

WAIT-FOR-EXECUTION JOB FINISHING TIME COMPUTING FUNCTION — 105

JOB RUNNING PRIORITY MANAGING FUNCTION — 103

JOB QUEUING SERVER — 33

SERVER AVAILABILITY COMPUTING FUNCTION — 106

SERVER OPERATIONAL SCHEDULE MANAGING FUNCTION — 108

SERVER PERFORMANCE MANAGING FUNCTION — 107

( TO THE SERVER TO EXECUTE THE JOB )

# FIG. 3

| CHARGE FOR USE PER UNIT TIME | TIME REQUIRED UNTIL THE WAIT-FOR-EXECUTION JOB IS ENDED |
| --- | --- |

EP 1 489 506 A1

# FIG. 4

START

**S20** GIVE A JOB

**S21** IS THE OPTIMIZATION OF THE PRIORITY IN EXECUTION POINTED? → NOT POINTED: "0" → (3)

POINTED: "1"

**S22** IS THE SIMILAR JOB HISTORY NUMBER EXECUTED IN THE PAST POINTED?

YES: NUMBER 1 *

NO: NUMBER 0

**S23** SEARCH THE SIMILAR JOB NUMBER FROM JOB RUNNING HISTORY DATA

YES: JOB NUMBER POINTED

**S24** SEARCH A TIME REQUIRED UNTIL THE GIVEN JOB IS COMPLETED, FROM SIMILAR JOB NUMBERS

**S25** COMPUTE AN AVAILABILITY OF THE JOB RUNNING SERVER

THE NUMBER (N) OF WAIT-FOR-EXECUTION JOBS HAVING THE HIGHER PRIORITY

**S26** COMPUTE A TIME REQUIRED UNTIL THE WAIT-FOR-EXECUTION JOB IS ENDED

**S27** DECIDE CONDITIONS NEEDED TO END THE GIVEN JOB UP TO A DESIRED DATE

**S28** CAN THE GIVEN JOB BE COMPLETED UP TO THE DESIRED DATE?

NOT COMPLETED (N=1) → (2)

NOT COMPLETED

COMPLETED → (1)

**S35** PULL UP THE PRIORITY IN THE WAIT-FOR-EXECUTION JOB BY ONE LEVEL

(1)

**S29** OFFER THE CHARGE FOR USING THE COMPUTER NEEDED FOR THE JOB PREFERENTIAL EXECUTION

(3)

**S30** IS THE JOB TO BE EXECUTED? → NO

YES

**S34** SAVE THE JOB RUNNING HISTORY AFTER THE JOB EXECUTION

END

(2)

**S31** OFFER JOB ACCEPTING CONDITIONS TO OTHER DEPARTMENTS

**S32** IS THE JOB EXECUTION TO BE REQUESTED?

YES

NO

**S33** OFFER THE SHORTEST COMPLETING DATE OF THE JOB

END

(1)

15

## FIG. 5

| TYPE OF EXECUTED JOB | DESIRED COMPLETION DATA OF THE JOB | PRIORITY IN EXECUTION | EXECUTED NUMBER OF SIMILAR JOBS | GROUP NAME IN UNIT OF WORKS | COMMENTS |
|---|---|---|---|---|---|

## FIG. 6

| EXECUTION NUMBER OF JOB | JOB ASSIGNED DAY | COMMENTS |
|---|---|---|

EP 1 489 506 A1

## FIG. 7

| SERVER NAME | COMPUTER CAPACITY | TIME REQUIRED UNTIL THE JOB IS FINISHED | LAPSED TIME AFTER THE JOB EXECUTION IS STARTED |
|---|---|---|---|

## FIG. 8

| NUMBER OF JOB | TYPE OF JOB | DESIRED COMPLETION DATE OF THE JOB | JOB CONSUMING POWER | GROUP NAME IN UNIT OF WORKS | COMMENTS | CHARGE FOR USING THE COMPUTER PER UNIT TIME |
|---|---|---|---|---|---|---|

## FIG. 9

| NUMBER OF JOB | TYPE OF JOB TO BE EXECUTED | GROUP NAME IN UNIT OF WORKS | COMMENTS | JOB CONSUMING POWER | JOB RUNNING TIME | CHARGE FOR USING THE COMPUTER PER UNIT TIME | COMPUTER GROUP |
|---|---|---|---|---|---|---|---|

EP 1 489 506 A1

# FIG. 10

JOB RUNNING HISTORY
SAVING DATA (FIG. 9)

OUTPUT ACCOUNTING INFORMATION AFTER
AN ACCOUNTING INFORMATION OUTPUT
FORMAT IS POINTED    S36

END

## FIG. 11

| NUMBER OF JOB | TYPE OF JOB TO BE EXECUTED | CPU TIME (h) | CHARGE FOR USING THE COMPUTER |
|---|---|---|---|
| (NUMBER OF JOB) | (TYPE OF JOB) | (CPU TIME) | (CHARGE FOR USE) |
| (NUMBER OF JOB) | (TYPE OF JOB) | (CPU TIME) | (CHARGE FOR USE) |
| (NUMBER OF JOB) | (TYPE OF JOB) | (CPU TIME) | (CHARGE FOR USE) |
| TOTAL | | (TOTAL CPU TIME) | (TOTAL CHARGE FOR USE) |

EP 1 489 506 A1

## INTERNATIONAL SEARCH REPORT

| International application No. |
| --- |
| PCT/JP03/02076 |

**A. CLASSIFICATION OF SUBJECT MATTER**
    Int.Cl⁷ G06F9/48, G06F15/177

According to International Patent Classification (IPC) or to both national classification and IPC

**B. FIELDS SEARCHED**

Minimum documentation searched (classification system followed by classification symbols)
    Int.Cl⁷ G06F9/46-9/54, G06F15/16-15/177, G06F1/00, G06F15/00

Documentation searched other than minimum documentation to the extent that such documents are included in the fields searched
    Jitsuyo Shinan Koho        1922-1996    Toroku Jitsuyo Shinan Koho    1994-2003
    Kokai Jitsuyo Shinan Koho  1971-2003    Jitsuyo Shinan Toroku Koho    1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | US 5202989 A (Hitachi, Ltd.), 13 April, 1993 (13.04.93), Column 3, line 26 to column 4, line 9 & JP 3-25556 A Page 6, upper left column, line 8 to lower left column, line 10 | 1-36 |
| Y | US 5465354 A (Hitachi, Ltd.), 07 November, 1995 (07.11.95), Column 8, lines 41 to 58 & JP 5-265775 A Par. No. [0033] | 1-36 |

☒ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 May, 2003 (26.05.03) | 03 June, 2003 (03.06.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**INTERNATIONAL SEARCH REPORT**

| International application No. |
|---|
| PCT/JP03/02076 |

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | EP 1170663 A2 (Matsushita Electric Industrial Co., Ltd.), 09 January, 2002 (09.01.02), Par. No. [0019] & US 2002/4814 A1 & JP 2002-24194 A Par. No. [0019] | 3,4,15,16, 27,28 |
| Y | JP 8-272627 A (Ricoh Co., Ltd.), 18 October, 1996 (18.10.96), Par. No. [0015] (Family: none) | 5,17,29 |
| Y | JP 2001-318776 A (Minolta Co., Ltd.), 16 November, 2001 (16.11.01), Par. No. [0009] (Family: none) | 6-9,18-21, 30-33 |
| Y | JP 7-234740 A (Hitachi, Ltd.), 05 September, 1995 (05.09.95), Par. No. [0009] (Family: none) | 10,11,22,23, 34,35 |
| Y | JP 7-244653 A (Hitachi, Ltd.), 19 September, 1995 (19.09.95), Par. No. [0036] (Family: none) | 12,24,36 |

Form PCT/ISA/210 (continuation of second sheet) (July 1998)